# EUROPEAN PATENT APPLICATION

(11) **EP 2 280 354 A1**
(43) Date of publication of application: **02.02.2011**
(21) Application number: 09290575.1
(22) Date of filing: 20.07.2009
(51) Int. Cl.: G06F 17/30

(54) **Methods and apparatus for bookmarking**

(71) Applicant: Hewlett-Packard Development Company, L.P., Houston, TX 77070 (US)
(72) Inventor: Boudalier, Pascal, 38053 Grenoble Cedex 09 (FR)
(74) Representative: Franks, Adam Peter

(57) **Abstract**

According to one embodiment of the present invention, there is provided a method of bookmarking an address of a web page. The method comprises viewing a web page on a web browser application, obtaining a web page address from a currently viewed web page, obtaining first metadata to be associated with the obtained web page address, identifying a further web page address to be associated with the obtained web page address, obtaining second metadata to be associated with further web page address, and storing the obtained associated web page address, obtained first metadata, further web page address and second metadata.

## Description

### BACKGROUND

Web browser applications, generally referred to as web browsers, enable users to view web pages accessible over the Internet, an intranet, or other appropriate private or public network. Web browsers provide the ability to navigate from one web page to another when the user of the web browser selects or 'clicks' on a link, such as a hyperlink, embedded within a viewed web page. A link typically comprises a visually identifiable part of the displayed web page, such as some text or an image, to which is associated an address of a further web page. Clicking on the link causes the web browser to retrieve the further web page from a web server and then display it. A link may also reference an index mark within a currently viewed web page, in which case the web browser displays the indexed part of the web.

Web browsers generally provide bookmark functionality that enable a user to bookmark, or store, a link to a viewed web page or to a web page identified by a link on a viewed web page. Such bookmark functionality enables a user to subsequently revisit a previously bookmarked web page by retrieving a link to the bookmarked web page and sending a request to retrieve the bookmarked web page to a web server identified in the link.

### BRIEF DESCRIPTION

Embodiments of the invention will now be described, by way of non-limiting example only, with reference to the accompanying drawings, in which:
Figure 1 is a block diagram of a system incorporating a web browser according to an embodiment of the present invention;
Figure 2 is a simplified flow diagram outlining example processing steps taken by an element of a web browser according to an embodiment of the present invention;
Figure 3 is a graphical illustration of a display generated according to an embodiment of the present invention; and
Figure 4 is a graphical illustration of a display generated according to an embodiment of the present invention.

### SUMMARY OF THE INVENTION

According to one aspect of embodiments of the present invention there is provided a method of bookmarking an address of a web page. The method comprises viewing a web page on a web browser application, obtaining a web page address from a currently viewed web page, obtaining first metadata to be associated with the obtained web page address, identifying a further web page address to be associated with the obtained web page address, obtaining second metadata to be associated with further web page address, and storing the obtained associated web page address, obtained first metadata, further web page address and second metadata.

According to a further aspect of embodiments of the present invention there is provided apparatus for creating a record of viewed web pages. The apparatus comprises a bookmark module configured to obtain a web page address from a currently viewed web page, to obtain first metadata to be associated with the obtained web page address, to identify a further web page address to be associated with the obtained web page address, to obtain second metadata to be associated with further web page address, and to store the obtained associated web page address, obtained first metadata, further web page address and second metadata.

According to a further aspect of embodiments of the present invention there is provided a method creating a file for use in displaying stored bookmark data. The method comprises obtaining bookmark data comprising a plurality of entries, each entry comprising a first web page address, first metadata associated with the first web page address, a further web page address associated with the first web page address, and second metadata associated with the further web page address. The method further comprises creating first mark-up language, to cause the display on a first portion of a display device of bookmark information relating to first metadata, and creating second mark-up language, to cause the display on a second portion of a display device of bookmark information relating to first metadata, and storing the first and second created mark-up language in a file.

### DETAILED DESCRIPTION

One problem with conventional web browser bookmarks is that each stored bookmark is independent from other stored bookmarks. At best, users may organize their bookmarks into groups of related, but independent, bookmarks, to assist in subsequently finding and accessing previously stored bookmarks.

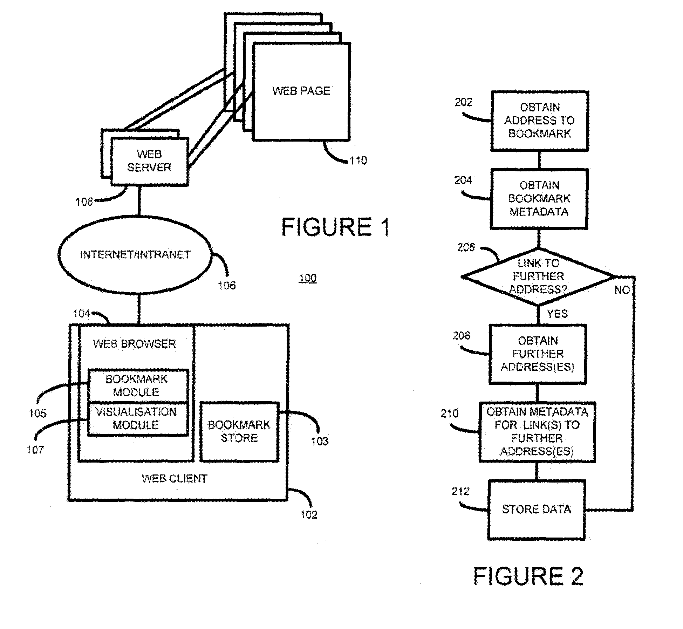

Referring now to Figure 1, there shown a block diagram of a system 100 incorporating a web browser according to an embodiment of the present invention.

A web client device 102, has a web browser application 104 to enable a user of the device 102 to request and receive web pages 110 served by one or more web servers 108 through a network 106. Received web pages are displayed on a display device (not shown) associated with the device 102. The user may interact with the web browser 104 through use of a suitable user interface (not shown), such as a keypad, mouse, touch sensitive screen, or the like. The web client device 102 may be any suitable computing device, for example, a personal computer, a mobile telephone, a personal digital assistant (PDA), a smartphone, a portable communication device, or the like. The network 106 may be the Internet, or any other suitable public or private network, intranet or the like.

In a first embodiment, the web browser 104 has a bookmarking module 105, as described in further detail below, with reference to Figure 2.

As a user of the device 102 browses the web pages 110 the web browser 104 displays a requested page on the display device associated with the web client device 102. If the user decides to store a bookmark to a web page the bookmark module 105 obtains (step 202) the address of the page to bookmark. The obtained address may, for example, be the address of the page currently being viewed, or be the address of a further web page identified in a link on the currently viewed page. The address may suitably be in the form of a uniform resource indicator (URI).

At step 204 the bookmark module 105 obtains (step 204) metadata relating to the address obtained in step 204.

The metadata may be obtained, for example, automatically by the bookmark module 105. This may be achieved, for example, by having the bookmark module 105 extract context information from the web page relating to the link. For example, if the address obtained in step 202 is the address of the currently viewed page, the bookmark module 105 may extract the title of the currently viewed web page and use the extracted title as the obtained metadata. If the address obtained in step 202 is a link to another web page, the bookmark module 105 may extract a description of the link from the web page, and use the extracted description as the obtained metadata. In these cases the extraction of the metadata may be achieved by suitably parsing the mark-up description language defining the currently viewed page. Alternatively, the bookmark module 105 may request the web page at the obtained address and extract metadata from the requested web page.

The metadata may also be obtained, for example, by requesting the user of the web client device 102 to input appropriate metadata through the user interface of the device 102. The metadata could be entered, for example, as free text or could be chosen from a predetermined list of metadata tags. The metadata may also include, for example, a user rating to indicate the usefulness or importance of the web page to which it relates, or any other appropriate information.

The aim of the obtained metadata is to assist a user in subsequently finding stored bookmarks.

At step 206, the bookmark module 105 determines whether the obtained address and obtained metadata are to be linked, or associated, with a further web page address. This may be achieved, for example, by displaying a suitable message to the user via the display device of the device 102, and by receiving user input through the user interface of the device 102.

If it is determined that the obtained address and obtained metadata are not to be linked with a further web page address, the bookmark module 105 stores (step 212) the obtained address and corresponding metadata in a bookmark store 103 accessible to the web client device 102. The bookmark store 103 may be any suitable locally or remotely accessible storage device, such as a non-volatile memory card, a hard disk drive, or the like.

If it is determined (step 206) that the obtained address and obtained metadata are to be linked with a further web page address, the bookmark module 105 obtains (step 208) a further web page address to use as a link to the obtained address and metadata. The further web page address may be, for example, a previously bookmarked address stored in the bookmark store 103, an address of a web page contained in a link on the currently viewed web page, or an address of a previously visited web paged stored, for instance, in a browser cache (not shown) of the web browser 104.

At step 210 the bookmark module 105 obtains metadata to be associated with the link to the obtained further web page address. As previously described, the metadata may be obtained either automatically by the bookmark module 105, or in response to a user input.

At step 212 the bookmark module 105 stores the obtained address, further address, and associated obtained metadata in a suitable format in the bookmark store 103.

As the user of the device 102 browses different web pages, stores bookmarks to web pages, and links bookmarks to further web pages, a personalized user browsing experience is recorded or stored.

In one embodiment the bookmark module 105 and visualization module 107 are integrated modules of the web browser application 104. In a further embodiment the bookmark module 105 and visualization modules are plug-in modules that may be added to an existing web browsing module. Embodiments of the invention will now be further described by way of an example use-case scenario.

In one use-case scenario the user of the device 102 uses the web client device 102 to browse the Internet 106 to investigate purchasing a new digital camera. Note that in the following examples any web addresses given are intended to be fictitious and are given solely for the purposes of illustration.

The user starts by browsing the web site of an on-line shop (www.shop1.com), and navigates eventually to a web page (www.shop1.com/cameras/ModelCam01) describing a digital camera the user is interested in purchasing.

The user decides to save a bookmark to the currently viewed web page (www.shop1.com/cameras/ModelCam01) and enters the associated metadata "Digital Camera Shop" when prompted (steps 202 and 204) to describe the web page. Since this is the first web site the user has visited in his quest to investigate digital cameras he doesn't link the current web page to a further address (step 206), and a bookmark is stored (step 212) in the bookmark store 103. A representation of the data stored is shown below in Table 1.

**Table 1**

| **URI** | **URI METADATA** |
|---|---|
| www.shop1.com/cameras/ModelCam01 | Digital camera shop |

Since the camera sounds of interest to the user, the user performs a web search for reviews of the camera model he has chosen.

The user navigates to a web page www.userreviews.com/Cam01 which is a user review website having a review of the chosen camera model. The review is a negative review of the chosen camera model. However, the user decides to bookmark the web page and enters the metadata "Camera discussion forum" to be associated with the web page address (steps 202 and 204). At step 206 the user decides to link the user review webpage to the on-line shop web page by selecting, at step 208, the previously saved bookmark of the on-line shop. At step 210 the user enters the metadata "Negative review" through the user interface of the device 102 to describe the link. At step 212 the linked-to web page and link metadata are associated with the previously stored bookmark in the bookmark store 103, for example as shown below in Table 2. Note that in the present embodiment the web address of the linked-to web page appears twice - once as a link to the first bookmarked page, and secondly as an independent bookmark.

**Table 2**

| **URI** | **URI METADATA** | **LINKED-TO URI(s)** | **LINK METADATA** |
|---|---|---|---|
| www.shop1.com/cameras/ModelCam01 | Digital camera shop | www.userreviews.com/Cam01 | Negative Review |
| | | | |
| www.userreviews.com/Cam01 | User Forum | | |

Next, the user returns to his previously performed web search of camera reviews, this time navigating to the web page www.camerareview.com/Cam01 which is a web page of a trade review magazine having a positive review of the chosen camera. Again, the user decides to bookmark (step 202) the viewed web page and, when prompted (step 204) enters the metadata "Trade Review" to be associated with the web page address of the currently viewed web page. When prompted (step 206) to link the web page address www.cameraview.com/Cam01 to a further address, the user selects (step 208) the previously bookmarked address www.shop1.com/cameras/ModelCam01, and enters the metadata "Positive review" to be associated with the linked-to webpage. This data is then stored in the bookmark stored, for example as shown below in Table 3.

**Table 3**

| **URI** | **URI METADATA** | **LINKED-TO URI(s)** | **LINK METADATA** |
|---|---|---|---|
| www.shop1.com/cameras/ModelCam01 | Digital camera shop | www.userreviews.com/Cam01 | Negative Review |
| | | www.camerareview.com/Cam01 | Positive Reviews |
| | | | |
| www.userreviews.com/Cam01 | User Forum | | |
| | | | |
| www.camerareview.com/Cam01 | Trade review | | |

As the user continues his browsing experience, adding bookmarks and linking web pages to further web pages, a record of the user browsing experience is built up, as shown in Table 4.

**Table 4**

| **URI** | **URIMETADATA** | **LINKED-TO URI(s)** | **LINK METADATA** |
|---|---|---|---|
| www.shop1.com/cameras/ModelCam01 | Digital camera | www.userreviews.com/Cam01 | Negative Review |
| | shop | www.camerareview.com/Cam01 | Positive Reviews |
| | | www.lenschooser.com | Technical |
| | | | information, |
| | | | Approved |
| | | | accessories |
| | | www.pricecompare.com/Cam01 | Price Info |
| | | www.camermaker/Cam01 | Manufacturers |
| | | | website, |
| | | | Technical |
| | | | information |
| | | | |
| www.userreviews.com/Cam01 | User forum | www.camerareview.com/Cam01 | Positive Review |
| | | | |
| www.camerareview.com/Cam01 | Trade Review | www.lenschooser.com | Approved |
| | | | Accessories, |
| | | | Technical |
| | | | information |
| | | | |
| www.pricecompare.com/Cam01 | Price comparitor | www.camermaker/Cam01 | On-line Shop |
| | | | |
| www.camermaker/Cam01 | Manufacturer site | www.lenschooser.com | Approved |
| | | | Accessories, |
| | | | Technical |
| | | | information |
| | | www.camerareview.com/Cam01 | Positive Review |
| | | | |
| www.lenschooser.com | Lens information | www.pricecompare.com/Lenses | Price info |

In the present embodiment the bookmarks, metadata and links related to a specific web browsing experience are stored in together, for example in a single file, object, container, or in a distinguishably separate part of a common file, object or container.

A record of a web browsing experience may be built up over multiple web browsing sessions, This may be achieved, for example, by requesting a user to assign a name or identifier to a particular web browsing experience, and to record all bookmarks and links relating to that web browsing experience in an appropriate file, object, or portion thereof.

One advantage of this is that a stored user web experience may be shared with other users. For example, a file, object, or portion thereof, containing a collection of bookmarks, bookmark metadata, links and link metadata may be sent or exchanged with other users who may then modify, add to or remove bookmarks, bookmark metadata, links or link metadata to enhance or update a recorded web browsing experience. Furthermore, one recorded user web experience may be linked to a further user web experience or multiple user web experiences may be combined into a single user web experience or multi-user web experience.

To enable users to visualize and to navigate through a recorded web browsing experience, the bookmark module 105 includes a visualization module 107.

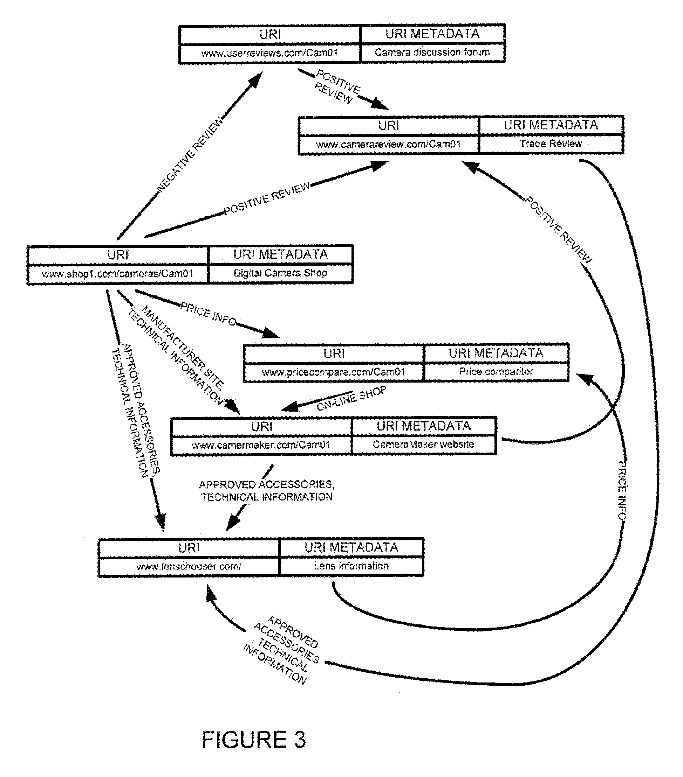

The visualization module 107 generates a visual map from a selected recorded web browsing experience. For example, Figure 3 shows one representation of a graphical map generated from the recorded web browsing experience shown in Table 4 above, and as displayed on the display device associated with the device 102.

The map shows not only the individual web sites bookmarked, but also the metadata relating to those web sites, as well as showing which bookmarked web pages are linked to other web pages. Additionally, the link metadata is shown, enabling a user to see and understand the reason why one web page was linked to another web page.

The map is generated in such a way that a user may navigate around the map by clicking on various parts of the map. For example, clicking on a URI or metadata associated with a web page address will cause the web browser application 104 to retrieve and display the appropriate web page. The map may be suitably generated as a web page, for instance by creating mark-up language, such as the hypertext markup language (HTML), so that viewing of the generated web page on a web browser will display the generated map. The generated web page may then be shared and sent to other users.

The visualization module 107 may generate maps in many different ways, depending on user requirements.

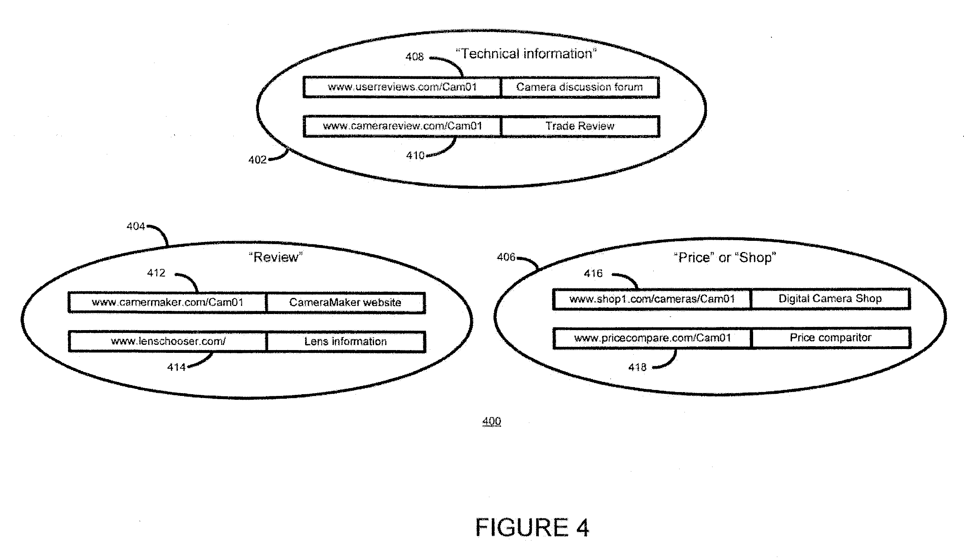

For example, Figure 4 shows a map 400 divided into to different areas 402, 404, and 406. Each area 402, 404, and 406 shows web pages grouped according to the link metadata associated with each web page address in the stored web browsing experience. For example, area 402 shows only web addresses in which the link metadata includes the word "review". Area 404 shows only web address in which the link metadata includes the words "technical information". Similarly, area 406 shows only web addresses in which the link metadata includes the words "price" or "shop".

Other map displays may be generated, for example, by grouping web addresses having common web address metadata and/or link metadata terms, or any other appropriate parameters.

The visualization module 107 may also generate a map to show only a subset of the information stored in the recorded web browser experience, for example, by excluding or filtering out any web page addresses or links having metadata including one or more specified words or terms.

In a further embodiment, if appropriate metadata is available, the visualization module 107 may generate a map based on context information obtained from the user. For example, if the user device 102 is able to determine the geographical location of the device 102, for example using a global positioning system (GPS) module, a specific map may be generated for the current location. For example, if the device 102 is a mobile device and is located in proximity to a physical shop for which a web page address is included in the recorded web browser experience, the map may show only details of the physical shop or shops to which the user is within a predetermined distance.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

## Claims

1. A method of bookmarking an address of a web page,
comprising:
viewing a web page on a web browser application;
obtaining a web page address from a currently viewed web page;
obtaining first metadata to be associated with the obtained web page address;
identifying a further web page address to be associated with the obtained web page address;
obtaining second metadata to be associated with further web page address; and
storing the obtained associated web page address, obtained first metadata, further web page address and second metadata.

2. The method of claim 1, wherein the further web page address is identified from a list of previously stored bookmarks.

3. The method of claim 1 or 2, wherein the further web page address is identified from the currently viewed web page.

4. The method of claim 1, 2, or 3, wherein the further web page address is identified from a cache of previously viewed web pages.

5. The method of any previous claim, wherein the first metadata relates to content of the web page at the obtained web page address, and wherein the second metadata relates to the relationship between the web page at the obtained web page address and the further web page.

6. The method of any previous claim, wherein the step of storing further comprises storing the obtained associated web page address, obtained first metadata, further web page address and second metadata in at least one of an identifiable file, an identifiable object, and an identifiable container, or portion thereof.

7. The method of any previous claim, wherein the step of obtaining the first metadata is configured to obtain the metadata from at least one of: the currently viewed web page; and a user interface.

8. The method any previous claim, wherein the step of obtaining the second metadata is configured to obtain the metadata through a user interface.

9. Apparatus for creating a record of viewed web pages,
comprising:
a bookmark module, for use with a web browser application, configured to:
obtain a web page address from a currently viewed web page;
obtain first metadata to be associated with the obtained web page address;
identify a further web page address to be associated with the obtained web page address;
obtain second metadata to be associated with further web page address; and
store the obtained associated web page addresses and first and second metadata.

10. The apparatus of claim 9, wherein the bookmark module is configured to identify the further web page address from at least one of: a list of previously stored bookmarks; the currently viewed web page; and a cache of previously viewed web pages.

11. The apparatus of claim 9 or 10, wherein the bookmark module is configured to store the obtained associated web page addresses and metadata in any one of: an identifiable file; an identifiable object; an identifiable container; or portion thereof.

12. The apparatus of claim 9, 10, or 11, wherein the bookmark module is configured to obtain the metadata from at least one of: the currently viewed web page; and a user interface.

13. The apparatus of claims 9 to 12, further comprising a visualisation module configure to:
display on a first portion of a display device first information relating to one or more web page addresses, associated further web page addresses, and associated metadata, the first information being associated with a first filter term or terms; and to
display on a second portion of the display device second information relating to one or more web page addresses, associated further web page addresses, and associated metadata, the second information being associated with a second filter term or terms.

14. A method of presenting stored bookmark data created in accordance with any of claims 1 to 8, comprising:
displaying on a first portion of a display device first information relating to one or more web page addresses, associated further web page addresses, and
associated metadata, the first information being associated with a first falter term or terms; and
displaying on a second portion of the display device second information relating to one or more web page addresses, associated further web page addresses, and associated metadata, the second information being associated with a second filter term or terms.

15. A method of creating a file for use in displaying storing bookmark data, comprising:
obtaining bookmark data comprising a plurality of entries, each entry comprising:
a first web page address;
first metadata associated with the first web page address;
a further web page address associated with the first web page address; and
second metadata associated with the further web page address;
creating first mark-up language to cause the display, on a first portion of a display device, of bookmark information relating to first metadata;
creating second mark-up language to cause the display, on a second portion of a display device, of bookmark information relating to first metadata; and storing the first and second created mark-up language in a file.
